**Europäisches Patentamt**

**European Patent Office**

**Office européen des brevets**

(11) Veröffentlichungsnummer: **0 194 539**
**A2**

## (12) EUROPÄISCHE PATENTANMELDUNG

(21) Anmeldenummer: 86102707.6

(22) Anmeldetag: 01.03.86

(51) Int. Cl.⁴: **C01B 13/11**

(30) Priorität: 06.03.85 DE 3507885

(43) Veröffentlichungstag der Anmeldung:
17.09.86 Patentblatt 86/38

(84) Benannte Vertragsstaaten:
DE FR IT

(71) Anmelder: **E.M. Heinkel KG**
**Bossler Strasse 45**
**D-7317 Wendlingen(DE)**

(72) Erfinder: **Schmiga, Hubert, Ing. grad.**
**Liegnitzer Strasse 37**
**D-7015 Korntal-Münchingen 1(DE)**
Erfinder: **Wagner, Klaus**
**Ahornweg 2**
**D-7447 Aichtal(DE)**

(74) Vertreter: **Thul, Leo, Dipl.-Phys.**
**Kurze Strasse 8 Postfach 300 929**
**D-7000 Stuttgart 30(DE)**

(54) **Hochfrequenz-Ozonisator.**

(57) Die Erfindung bezieht sich auf einen Ozonisator, d.h. auf eine Vorrichtung zum Erzeugen von Ozon aus Luft oder Sauerstoff. Ozonisatoren sind schon seit vielen Jahren bekannt, insbesondere der auf der sogenannten stillen Enladung beruhende Siemens-Ozonisator. Dabei wird die Luft zwischen zwei Elektroden, zwischen denen eine Koronarentladung stattfindet, durchgeleitet. Dabei entwickelt sich sehr stark Wärme, was ein Hauptproblem der Ozonisatoren ist. Die Erfindung zeigt den baulichen Aufbau eines Ozonisators, bei dem das Wärmeproblem gut gelöst und bei dem die Ozonausbeute optimal ist.

FIG.1

EP 0 194 539 A2

## Hochfrequenz-Ozonisator

Die Erfindung bezieht sich auf einen Hochfrequenz-Ozonisator zur Ozonisierung von Luft oder Sauerstoff mittels stiller Entladung.

Ozonisatoren, insbesondere der »Siemenssche Ozonisator" sind schon sehr lange bekannt. Hierbei nutzt man die Entladung zwischen zwei mit Dielektrikum abgedeckten Elektroden aus, die bei angelegtem hochgespanntem Wechselstrom entsteht. · Die Elektroden können hierbei plattenförmig oder rohrförmig sein.

Im Laufe der Jahre sind eine Vielzahl von Vorschlägen gemacht worden, um einerseits den Energieverbrauch günstiger und die Ozonausbeute wirtschaftlicher zu machen. Als vorteilhaft haben sich Ozonisatoren erwiesen, die von einem Hochspannungs-Impulsgenerator angesteuert werden, und die aus einem Gasentladungsrohr mit zwei rohrförmigen, koaxial angeordneten Elektroden, deren eine mit Masse und deren andere mit der Hochspannung verbunden ist, bestehen (vgl. z.B. EP-OS 88 973).

Es ist nun bekannt, daß die Ozonausbeute mit der angelegten Frequenz steigt; es ist aber auch bekannt, daß die Wärmeverluste ebenfalls mit der Frequenz ansteigen. Bei der Erzeugung von Ozon mittels stiller Entladung kommt es nämlich zu starker Erhitzung der Luft bzw. des Sauerstoffs in der Entladungsstrecke. Mit zunehmender Erhitzung der Entladungsstrecke nimmt die Ozonerzeugung aber bei steigender Energiezufuhr ab. Daraus ergibt sich, daß der Kosten-Nutzen-Effekt bei der Ozonerzeugung hauptsächlich durch Verminderung des Wärmeproblems günstig beeinflußt werden kann. Die üblichen, mit 50 Hz betriebenen Ozongeneratoren benötigen zu einer zufriedenstellenden Ozonausbeute eine sehr hohe Betriebsspannung (15 -30 KV) und große Gefäße mit einem entsprechend aufwendigen Kühlsystem. Dies ist jedoch wirtschaftlich und technisch nicht mehr vertretbar bei kleineren und mittleren Anlagen, die beispielsweise bei Schwimmbädern oder Trinkwasseraufbereitungsanlagen eingesetzt werden sollen.

Man hat hierfür Hochfrequenzozonisatoren entwickelt, die meistens mit Impulsen angesteuert werden. Die Entladungsgefäße können dann klein sein, während die Betriebsspannung bei 3-4 kV liegt. Das Wärme-bzw. das Kühlproblem bleibt aber bei allen Ozonisatoren bestehen, um eine günstige Energiebilanz zu erreichen (vgl. z.B. EP-Offenlegung 0088 973, DE-PS 22 40 986, DE-PS 44 978). Das Energieproblem und damit die Vermeidung großer Wärme bei hinreichend guter Ozonausbeute wird aber noch dort verschärft, wo nicht beliebig viel Energie zur Verfügung steht, z.B. wenn man die Energie aus Solarbatterien gewinnt.

Der Erfindung liegt daher die Aufgabe zugrunde, einen HF-Ozonisator anzugeben, der so aufgebaut ist, daß die Wärmeverluste so gering sind, daß bei guter Ozonausbeute eine optimale Energiebilanz gegeben ist.

Die Merkmale des neuen Ozonisators ergeben sich aus dem Patentanspruch 1.

Diese Konstruktion bringt eine Reihe von Vorteilen, insbesondere im Hinblick auf die Kühlung. So saugt die gut wärmeleitende Masse-Elektrode die entstehende Wärme nach außen auf die Gehäuseoberfläche und unterstützt damit die Kühlwirkung der durchströmenden Luft bzw. des Sauerstoffs. Die als Hochspannungselektrode dienende Aluminiumschicht bewirkt eine Verteilung der Oberflächenwärme auf die gesamte Länge des Entladungsrohres, wenn diese Schicht so lang ist wie das Entladungsrohr. Ferner strahlt die nach innen wirkende Verspiegelung die Wärme auf die durchströmende Luft. Man erhält damit also eine sehr gute Wärmeabführung, ohne besondere Kühlsysteme verwenden zu müssen, und damit eine gute Energiebilanz. Letztere wird noch dadurch verbessert, daß die Ozonerzeugung durch das bei der stillen Entladung entstehende und an der Verspiegelung reflektierte UV-Licht verstärkt wird. Schließlich bewirken die Rillen an der Oberfläche der Masse-Elektrode eine gleichmäßige Verteilung der Koronentladung auf dem gesamten Umfang der Innenelektrode.

Die Innenelektrode kann vorzugsweise aus Edelstahl bestehen und mit dem Kühlkörper ein Stück bilden. Es wird aber vielfach vorteilhafter und kostengünstiger sein, Innenelektrode und Kühlkörper getrennt herzustellen und dann formschlüssig miteinander zu verbinden.

Eine vorteilhafte Abänderung eines auf dem gleichen konstruktiven Prinzip beruhenden Ozonisators ergibt sich aus dem Patentanspruch 2.

Dieser Vorschlag geht von den bekannten Entkeimungs-und Ozonstrahlern aus. Diese Strahler sind besonders ausgebildete Quecksilberstrahler mit kurzwelliger UV-Strahlung. Hierbei wird das zu entkeimende Wasser bzw. die Luft durch ein Gehäuse geleitet, in dem sich der bzw. die Entkeimungsstrahler befinden (vgl. z.B. Osram Entkeimungs-und Ozonstrahler HNS, Produktionsinformation März 1984, R 1413/384).

Die erfinderische Idee besteht nun darin, das Prinzip derartiger Strahler mit einem Ozonisator zu kombinieren, und zwar vorzugsweise mit einem Ozonisator gemäß Anspruch 1.

Es wird daher auch bei der abgeänderten Version des Ozonisators eine Glasröhre verwendet, die außen auf einer gewissen Länge mit einer nach innen spiegelnden Aluminiumschicht bedampft ist, welche als Hochspannungselektrode dient.

Anstelle der inneren metallischen Masseelektrode, wird nun das zu reinigende Wasser selbst verwendet, indem es entsprechend von der Luft isoliert durch die Entladungsröhre geleitet wird. Die Isolierung läßt sich einfach durch eine zweite, konzentrische Röhre erreichen, wobei beide Röhren luftdicht miteinander verbunden sind und eine Eintritts-und eine Austrittsöffnung für die Luft vorgesehen ist. Die Entladung findet nun zwischen der Aluminiumschicht und dem fließenden Wasser statt, so daß die Luft wie im ersten Beispiel ozonisiert wird; zusätzlich wird das Wasser in bekannter Weise durch die intensive UV-Strahlung entkeimt.

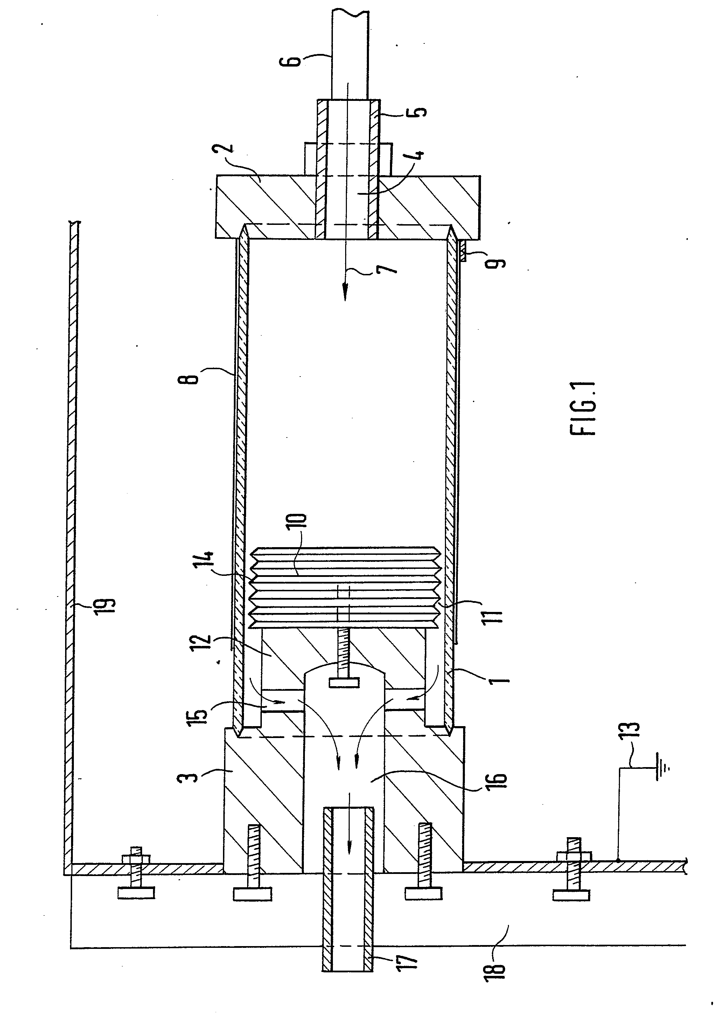

Fig.1 zeigt ein Ausführungsbeispiel gemäß der Lehre des Anspruchs 1.

Der Ozonisator besteht aus dem Glasrohr 1, das dicht in die Endhalterungen 2 und 3 eingespannt ist. Die Endhalterung 2 hat eine zylindrische Öffnung 4 sowie einen Stutzen 5, an den der Luftschlauch 6 anschließbar ist. Damit kann also die Luft in Richtung des Pfeiles 7 in das Innere des Glasrohrs 1 strömen. Das Glasrohr 1 ist außen fast auf seiner gesamten Länge mit einer Aluminiumschicht 8 bedampft, die mit der Endhalterung 2 elektrisch verbunden ist, wie mit 9 angedeutet ist. Es ist nicht immer erforderlich, das Glasrohr 1 auf seiner gesamten Länge zu bedampfen; meist genügt es schon, die Schicht in etwa so groß zu machen wie die Länge der Innenelektrode 10.

Am linken Ende des Glasrohrs 1 befindet sich die Innenelektrode 10, die durch einen Vollzylinder aus nichtrostendem Stahl gebildet ist. Der Durchmesser der Elektrode 10 ist etwas kleiner als der Innendurchmesser des Glasrohres 1, so daß ein Luftspalt 11 vorhanden ist, durch den die Luft strömt und in dem die Entladung stattfindet. Die Elektrode 10 ist über den zylindrischen metallischen Ansatzteil 12 mit der metallischen Endhalterung 3 und diese mit der Masseleitung 13 verbunden. Die Elektrode 10 weist Rillen 14 auf, die eine bessere Entladung garantieren.

Am Umfang des Ansatzteiles 12, das auch mit der Endhalterung 3 aus einem Stück bestehen kann, sind mehrere Kanäle 15 für die ozonisierte Luft vorgesehen, die dann durch den Kanal 6 zu dem Ansatzstutzen 17, an den ein Schlauch angeschlossen werden kann, strömt.

Die Endhalterung 3 und der Ansatzteil 12, welch letzterer fest mit der Innenelektrode 10 verbunden ist, dienen als Kühlkörper, d.h. sie führen die bei der Entladung entstehende Wärme nach außen ab, und zwar über den Kühlkörper 18 und das Gehäuse 19. Es hat sich gezeigt, daß als Metall für die Kühlteile 3 und 12 am besten Kupfer geeignet ist, das mit einer Schutzschicht gegen Oxidation, z.B. mit einer Nickelschicht, versehen ist.

Aus Fig.1 erkennt man, daß die Luft schon einen langen Weg zurückgelegt hat, bis sie die Innenelektrode 10 erreicht. Auf diesem Wege wird die Luft durch die von der Schicht 8 reflektierte UV-Strahlung zusätzlich ozonisiert.

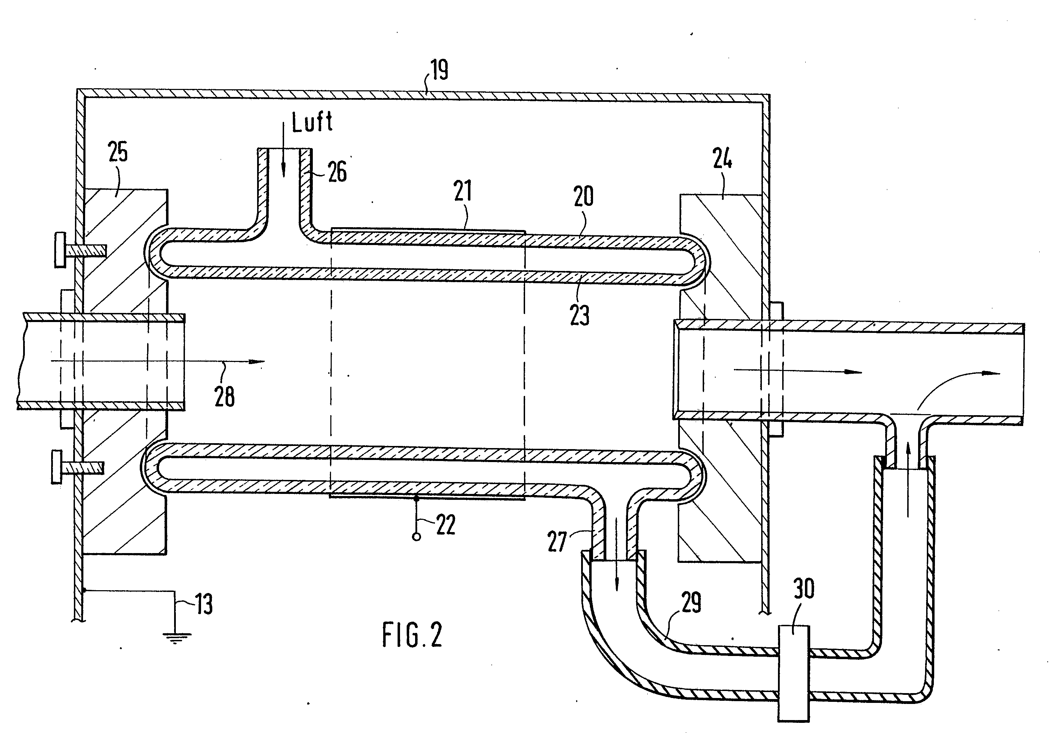

Fig.2 zeigt einen Ozonisator gemäß Anspruch 2.

Dieser besteht aus der äußeren Entladungsröhre 20 mit der aufgedampften, ringförmigen Aluminiumschicht 21 von ca. 22 -30 mm Breite, die mit der Hochspannung verbunden ist. Die Aluminiumschicht kann auch auf andere Weise aufgebracht werden, z.B. in Form eines Klebebandes. Die Aluminiumschicht 21 ist über den schematisch dargestellten Anschluß 22 mit der Hochspannung von ca. 3-8 KV verbunden. Konzentrisch zu der Röhre 20 ist die innere Röhre 23 im Abstand von ca. 1 mm angeordnet. In der Zeichnung ist dieser Abstand zur Verdeutlichung vergrössert dargestellt. Beide Röhren sind an ihren Enden luftdicht miteinander verbunden und in die metallischen Endstücke 24 und 25 eingesetzt, die ihrerseits mit Masse verbunden sind. Die beiden Röhren 20 und 23 können auch direkt, d.h. ohne Verbindung miteinander, in die Endstücke eingesetzt sein. Um eine gute Wärmeabführung zu erzielen, bestehen die metallischen Endstücke 24 und 25 aus Kupfer.

Die zu ozonisierende Luft tritt durch den Stutzen 26 ein und ozonisiert durch den Stutzen 27 wieder aus. Als Masseelektrode dient das strömende Wasser, wie durch den Pfeil 28 angedeutet ist, das durch das Innere der Doppelröhre 20, 23 strömt. Das durchfließende Wasser wird von der sich bei der Entladung bildenden UV-Strahlung durchdrungen und so schon zu einem guten Teil entkeimt. Die ozonisierte Luft wird über die Leitung 29 mit dem Ventil 30 dem Wasser beigemischt, so daß das Wasser intensiver von Mikroorganismen befreit wird. Das durchströmende Wasser hat noch eine weitere Zusatzwirkung, indem es noch für eine bessere Kühlung sorgt.

## Ansprüche

1.) Hochfrequenz-Ozonisator zur Ozonisierung von Luft oder Sauerstoff mittels stiller Entladung, bestehend aus einem beiderseits offenen Gasentladungsrohr aus elektrisch nicht leitendem Material durch das die Luft oder der Sauerstoff geleitet wird und das zwei koaxial angeordnete Elektroden, von denen eine mit der Hochspannung und die andere mit Masse verbunden ist, enthält,

dadurch gekennzeichnet, daß die innere Elektrode aus einem massiven, nichtrostenden Metallzylinder (8) besteht, dessen Durchmesser geringfügig kleiner als der Innendurchmesser des Gasentladungsrohres (1), daß die zweite Elektrode, die mit der Hochspannung verbunden ist, aus einer auf die Außenseite des Gasentladungsrohres (1) aufgedampften, nach innen spiegelnden Aluminiumschicht (7) besteht,

daß ferner die Innenelektrode (10) formschlüssig mit einem konzentrischen, nichtrostenden Metallkörper (3) verbunden ist, der Austrittsöffnungen für die ozonisierte Luft aufweist, und der mit dem Gehäuse (15) und mit Masse verbunden ist.

2. HF-Ozonisator nach Anspruch 1, dadurch gekennzeichnet, daß die Ausdehnung der Aluminiumschicht (7) wesentlich größer ist als die der Innenelektrode (10).

3. HF-Ozonisator nach Anspruch 1, dadurch gekennzeichnet, daß die Innenelektrode (10) aus Edelstahl besteht.

4. HF-Ozonisator nach Anspruch 1-3, dadurch gekennzeichnet, daß die Oberfläche der Innenelektrode (10) mit Rillen (11) versehen ist.

5. HF-Ozonisator nach Anspruch 1-4, dadurch gekennzeichnet, daß die Innenelektrode (10) und der Metallkörper (3) aus einem Stück bestehen.

6. HF-Ozonisator zur Ozonisierung von Luft oder Sauerstoff mittels stiller Entladung bestehend aus einem Gasentladungsrohr aus elektrisch nicht leitendem Material, auf dessen Außenseite eine Aluminiumschicht als Hochspannungselektrode aufgedampft ist, dadurch gekennzeichnet, daß als Masseelektrode das zu reinigende, durch das Entladungsrohr strömende Wasser (24) dient und daß zur Bildung eines Luftkanals für die zu ozonisierende Luft eine innere konzentrische zweite Röhre (19) vorgesehen ist, die an ihren Enden luftdicht mit der Entladungsröhre (17) verbunden ist, und daß schließlich an der Entladungsröhre Ein- (22) und Auslaufstutzen (23) für die Luft vorgesehen sind.

FIG.1

0 194 539

Luft

25

26

21

20

23

24

19

28

22

27

29

30

13

FIG.2

0 194 539